# EUROPÄISCHE PATENTSCHRIFT

(11) **EP 2 013 049 B1**
(45) Veröffentlichungstag und Bekanntmachung des Hinweises auf die Patenterteilung: **03.11.2010**
(21) Anmeldenummer: 07724795.5
(22) Anmeldetag: 02.05.2007
(51) Int. Cl.: B60J 10/08, B60J 10/04, B60J 10/00, B60J 5/04

(54) **VIERTÜRIGES KRAFTFAHRZEUG MIT TÜRDICHTUNGSSYSTEM FÜR RAHMENLOSE TÜREN**
FOUR-DOOR MOTOR VEHICLE HAVING A DOOR SEALING SYSTEM FOR FRAMELESS DOORS
VEHICULE AUTOMOBILE A QUATRE PORTES AVEC SYSTEME D'ETANCHEITE DE PORTE POUR DES PORTES SANS CADRE

(30) Priorität: 02.05.2006 AT 3572006 U
(43) Veröffentlichungstag der Anmeldung: 14.01.2009
(73) Patentinhaber: Magna Steyr Fahrzeugtechnik AG & Co. KG, 8041 Graz (AT)
(72) Erfinder: DIETZ, Wolfgang c/o MAGNA STEYR Fahrzeugtechnik AG & Co KG, 8041 Graz (AT); BINDAR, Gernot, 8042 Graz (AT)
(74) Vertreter: Harringer, Thomas
(86) Internationale Anmeldenummer: PCT/EP2007/003869
(87) Internationale Veröffentlichungsnummer: WO 2007/124952

(56) Entgegenhaltungen:
- DE-B3- 10 346 707
- DE-B3-102004 041 741
- US-A- 5 860 692

## Beschreibung

Die Erfindung betrifft ein viertüriges Kraftfahrzeug mit einem Türdichtungssystem für rahmenlose Türen, dessen Karosse beiderseits einen vorderen und einen hinteren Türausschnitt und zwischen diesen eine B-Säule hat, die in Höhe der Brüstung endet, wobei die Türausschnitte von einer Primärdichtung gesäumt sind. Ein derartiges gattungsgemäßes Fahrzeug ist aus der DE 103 46 707 bekannt. Kraftfahrzeuge mit rahmenlosen Türen (Coupés oder Cabriolets) werden bis heute zweitürig ausgeführt, weil einige Probleme, die sich bei vier Türen stellen, als unüberwindbar galten. Das freie Ende der B-Säule in Brüstungshöhe erfordert besondere Maßnahmen zur Versteifung und zur Abdichtung.

Die Abdichtung ist dadurch schwierig, dass eine Reihe von Dichtstellen zwischen beweglichen Teilen zu gestalten sind: Zwischen dem Türausschnitt der Karosse und den Türen als Primärdichtung, zwischen den einander zugewandten Stirnflächen der beiden Türen als Sekundärdichtung, zwischen den (natürlich rahmenlosen) Fenstern und den Türen als Fensterschachtdichtungen, und am freien oberen Ende der B-Säule. An diesem kommen alle Dichtstellen zusammen. Ein weiteres Problem entsteht dadurch, dass die versenkbaren Fenster mangels des oberen Teiles einer B-Säule in gehobenem Zustand dichtend aneinander dicht anschließen, in versenktem Zustand aber in Längsrichtung voneinander entfernt sein müssen, um zur Gänze von der Tür aufgenommen werden zu können.

Alle diese Probleme sind bei den im modernen Kraftfahrzeugbau geltenden hohen Anforderungen an die Dichtheit zu erfüllen. Das ist die Aufgabe, die mit den kennzeichnenden Merkmalen des 1. Anspruches der vorliegenden Erfindung gelöst werden soll. Die Unteransprüche haben vorteilhafte Weiterbildungen zum Gegenstand.

Im folgenden wird die Erfindung anhand von Abbildungen beschrieben und erläutert. Es stellen dar:
Fig. 1: Eine Seitenansicht eines erfindungsgemäßen Kraftfahrzeuges,
Fig. 2: Detail II in Fig. 1, ohne Türen,
Fig. 3: Einen horizontalen Schnitt nach III-III in Fig. 2,
Fig. 4: Einen vertikalen Schnitt IV-IV in Fig. 2.

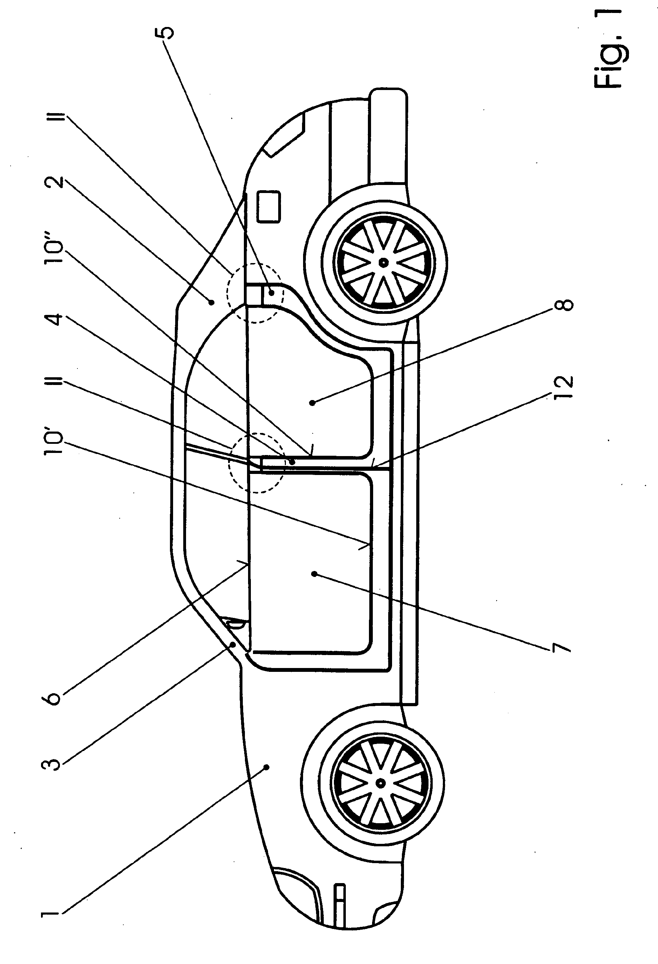

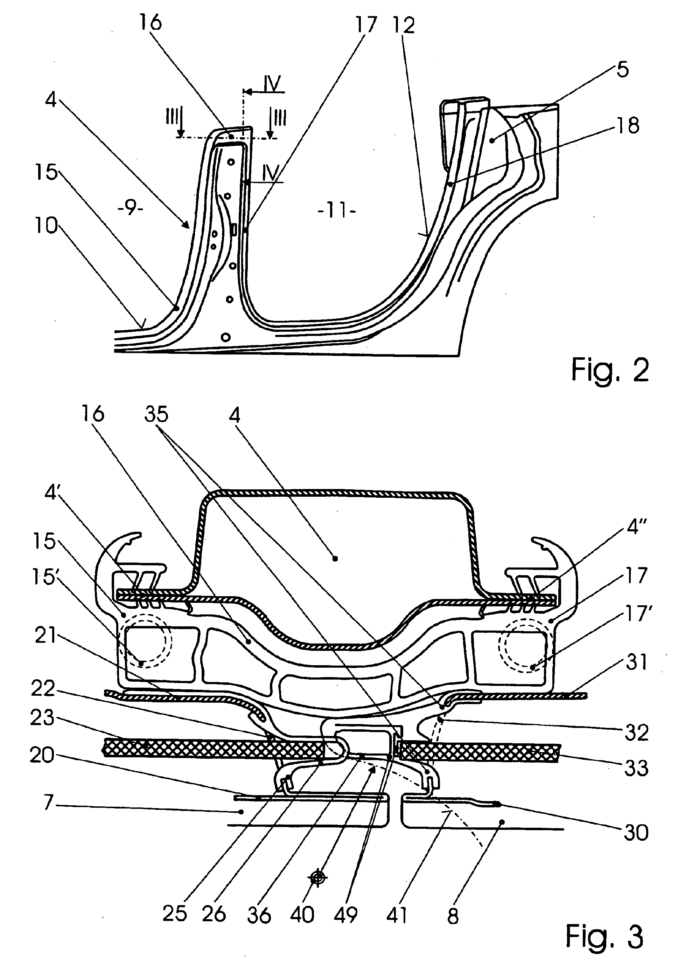

In **Fig. 1** ist die Karosse beispielsweise die eines Cabriolets mit 1 und dessen Faltdach mit 2 bezeichnet; es könnte auch das feste und gegebenenfalls abnehmbare Dach eines Coupés sein. Die Karosse hat beiderseits eine A-Säule 3, die über die ganze Höhe des Fahrzeuges reicht, sowie eine B-Säule 4 und eine C-Säule 5, welche nur bis zu einer Brüstung 6 reichen. Da es sich hier um ein viertüriges Cabriolet handelt, sind Vordertüren 7 und hintere Türen 8 vorhanden, welche in Türausschnitte 9, 11 der Karosse 1 passen (siehe Fig. 2). Mit fetten Linien sind, obwohl bei geschlossenen Türen unsichtbar, eine Primärdichtung 10', 10" sowie eine Sekundärdichtung 12 zwischen den beiden Türen 7, 8 eingezeichnet.

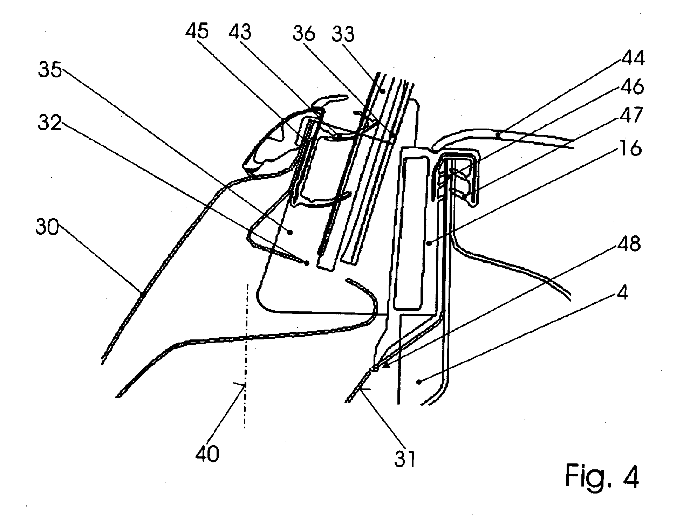

In **Fig. 2** ist der die nur bis zur Brüstung 6 reichende B-Säule enthaltende Teil ohne Türen dargestellt. Die B-Säule ist ein Hohlkörper, der aus zwei an den Rändern 4', 4" (siehe Fig. 4) verbundenen Blechteilen besteht. Auf diese Ränder ist die Primärdichtung 10', 10" in der üblichen Weise aufgesteckt. Die Primärdichtung besteht aus den Teilen 15, 17, die die B-Säule umrahmen und aus dem Teil 18 an der C-Säule. In der Höhe der Brüstung, am oberen Ende der B-Säule, bildet die Primärdichtung einen Dichtpolster 16.

**Fig. 3** zeigt einen Schnitt durch die B-Säule in der Höhe des Dichtpolsters 16. Dieser ist ein über die ganze Erstreckung der B-Säule 4 in Fahrzeuglängsrichtung reichender nachgiebiger Körper, der vorne und hinten mit den auf die Ränder 4',4" aufgesteckten Teilen 15, 17 der Primärdichtung vereint ist. Im gezeigten Ausführungsbeispiel ist der Dichtpolster 16 ein Hohlkörper mit mehreren Kammern, er könnte aber auch ein im erforderlichen Maß zusammenpressbarer Voll- oder Schaumstoffkörper sein. Der Dichtpolster 16 ist nur in der Region des oberen Endes der B-Säule vorgesehen, darunter schließen sich an ihn mit den Teilen 15, 17 der Primärdichtung einstückige Schläuche 15', 17' an, von der Art üblicher Ausführungsformen einer Türdichtung.

Von der vorderen Tür 7 ist nur der hintere Rand zu sehen. Sie besteht aus einem Aussenblech 20, einem Innenblech 21 und einer der hinteren Tür 8 zugewandten Stirnfläche mit einem Ausschnitt 22. Die Fensterscheibe ist mit 23 bezeichnet. In dem Ausschnitt 22 zwischen den Rändern der Bleche 20, 21 sitzt ein Formstück 25, welches einen der hinteren Tür 8 zugewandten Dichtwulst 26 bildet. Die hintere Tür 8 besteht ebenfalls aus einem Aussenblech 30 und einem Innenblech 31. In deren der Vordertür 7 zugewandten Stirnseite ist ein Ausschnitt 32 zum Einstecken eines Formstückes 35 vorgesehen, dessen Dichtwulst 36 an dem Dichtpolster 16 anliegt und mit dem Dichtwulst (26) der Vordertür (7) in der Weise zusammenwirkt, dass er sich beim Schließen der Tür zwischen diesen und den Dichtpolster 16 schiebt. In der Fig. 3 sind die beiden Dichtwülste 26, 36 unverformt und einander überschneidend eingezeichnet. In Wirklichkeit verformen sie sich entsprechend.

Zur Erläuterung dieser Anordnung der beiden Dichtwülste 26, 36 ist die Scharnierachse 40 der hinteren Tür 40 und die Hüllkurve 41 des Dichtwulstes 36 beim Öffnen der hinteren Tür 8 eingezeichnet. Die gezeichnete relative Lage der beiden Dichtwülste 26, 36 erlaubt es, die vordere Tür 7 bei geöffneter hinterer Tür zu öffnen und zu schließen und die hintere Tür 8 bei geschlossener Vordertür 7 zu öffnen und zu schließen. Die Fensterscheibe der hinteren Tür ist mit 33 bezeichnet.

An der hinteren Fensterscheibe 33 ist eine Stegdichtung ("sash seal") 49 angebracht, die die Abdichtung zwischen der geschlossen vorderen (23) und hinteren Fensterscheibe 33 und den dichten Übergang zum Dichtwulst 36 der hinteren Tür 8 sicherstellt.

In dem Vertikalschnitt der **Fig. 4** ist zu erkennen, dass der Dichtpolster 16 der Primärdichtung auch auf den oberen Rand der B-Säule 4 aufgesteckt ist und sich in vertikaler Richtung von dem oberen Rand 46 abwärts nur bis zu einer Lippe 48 erstreckt, die am Innenblech 31 der Hinterfür 8 anliegt. Es ist zu erkennen, dass der Dichtpolster 16 auch am oberen Rand 46 der B-Säule 4 in das entlang der Ränder 4', 4" der gesamten B-Säule verlaufenden Klemmprofils vereint ist. Weiters erkennt man, dass das zweite Formstück 35 mit seiner Innenseite am Dichtpolster 16 anliegt und an seiner Aussenseite in eine Fensterschachtdichtung 43 übergeht, die die Dichtheit zwischen der Fensterscheibe 33 und dem oberen Rand 45 des Aussenbleches 30 der Tür herstellt.

## Patentansprüche

1. Viertüriges Kraftfahrzeug mit einem Türdichtungssystem für rahmenlose Türen, dessen Karosse einen vorderen (9) und einen hinteren (11) Türausschnitt, entsprechende vordere und hintere Türen (7,8) und zwischen den Türausschnitten eine B-Säule (4) hat, die in Höhe der Brüstung (6) endet, wobei die Türausschnitte (9,11) von einer Primärdichtung (15,17,18) gesäumt sind **dadurch gekennzeichnet, dass**
a) die Primärdichtung (15,17,18) an ihrem den Brüstungsbereich der B-Säule (4) umgebenden Teil einen von der B-Säule nach aussen abstehenden Dichtpolster (16) bildet,
b) die Türen (7,8) im Bereich des Polsters (16) Formstücke (25,35) aufweisen, welche bei geschlossenen Türen aneinander und an dem Dichtpolster (16) anliegen,
c) wobei die Formstücke (25,35) einerseits die Fensterscheiben (23,33) gegenüber den Türblechen (20,21,30,31) abdichten und andererseits zwischen den einander zugewandten Stirnflächen der beiden Türen (7,8) eine Sekundärdichtung (12) bilden.

2. Viertüriges Kraftfahrzeug nach Anspruch 1, **dadurch gekennzeichnet, dass** die Formstücke (25,35) an ihren einander zugewandten Seiten miteinander zusammenwirkende nachgiebige Dichtwülste (26,36) bilden.

3. Viertüriges Kraftfahrzeug nach Anspruch 2, **dadurch gekennzeichnet, dass** die Türen (7,8) mit ihrer in Fahrtrichtung vorderen Seite mittels Scharnieren (40) an der Karosse (1) angeschlagen sind und der Dichtwulst (36) des Formstückes (35) der hinteren Türe (8) dem Dichtpolster (16) näher ist als der Dichtwulst (26) des Formstückes (25) der vorderen Türe (7), sodass er sich beim Schließen der hinteren Tür (8) teilweise zwischen den Dichtwulst (26) der vorderen Tür (7) und den Dichtpolster (16) schiebt.

4. Viertüriges Kraftfahrzeug nach Anspruch 1, **dadurch gekennzeichnet, dass** die Formstücke (25,35) in Ausschnitte (22,32) an der jeweiligen Stirnseite der jeweiligen Türe (7,8) eingesteckt und auf den oberen Brüstungsrand (45) der Tür aufgesteckt sind.

5. Viertüriges Kraftfahrzeug nach Anspruch 1, **dadurch gekennzeichnet, dass** die Formstücke (25,35) im Inneren der Tür (7,8) in die Fensterschachtdichtungen (43) übergehen.

6. Viertüriges Kraftfahrzeug nach Anspruch 5, **dadurch gekennzeichnet, dass** die Formstücke (25,35) mit den Fensterschachtdichtungen (43) einstückig beziehungsweise mit durch Vulkanisieren verbunden sind.

## Claims

1. Four-door motor vehicle having a door sealing system for frameless doors, the body of which motor vehicle has a front door cutout (9) and a rear door cutout (11), corresponding front and rear doors (7, 8) and, between the door cutouts, a B pillar (4) which ends level with the window sill (6), wherein the door cutouts (9, 11) are bordered by a primary seal (15, 17, 18), **characterized in that**
a) the primary seal (15, 17, 18), at its part which surrounds the window sill region of the B pillar (4), forms a sealing cushion (16) which projects outward from the B pillar,
b) in the region of the cushion (16), the doors (7, 8) have molded parts (25, 35) which bear against each other and against the sealing cushion (16) when the doors are closed,
c) the molded parts (25, 35) sealing off the window panes (23, 33) in relation to the door panels (20, 21, 30, 31) and forming a secondary seal (12) between the mutually facing end surfaces of the two doors (7, 8).

2. Four-door motor vehicle according to Claim 1, **characterized in that** the molded parts (25, 35), on their mutually facing sides, form flexible sealing beads (26, 36) which interact with each other.

3. Four-door motor vehicle according to Claim 2, **characterized in that** the doors (7, 8) are fastened at their side which is in front in the direction of travel to the body (1) by means of hinges (40) and the sealing bead (36) of the molded part (35) of the rear door (8) is closer to the sealing cushion (16) than the sealing bead (26) of the molded part (25) of the front door (7), and therefore it partially slides between the sealing bead (26) of the front door (7) and the sealing cushion (16) when the rear door (8) is closed.

4. Four-door motor vehicle according to Claim 1, **characterized in that** the molded parts (25, 35) are inserted into cutouts (22, 32) on the respective end side of the respective door (7, 8) and are fitted onto the upper window sill edge (45) of the door.

5. Four-door motor vehicle according to Claim 1, **characterized in that** the molded parts (25, 35) merge in the interior of the door (7, 8) into the window channel seals (43).

6. Four-door motor vehicle according to Claim 5, **characterized in that** the molded parts (25, 35) are connected to the window channel seals (43) integrally or by means of vulcanization.

## Revendications

1. Véhicule automobile à quatre portes avec un système d'étanchéité de porte pour des portes sans cadre, dont la carrosserie comporte une découpe de porte avant (9) et arrière (11), des portes avant et arrière correspondantes (7, 8) et une colonne B (4) entre les découpes de porte, qui se termine à hauteur du bord supérieur (6), dans lequel les découpes de porte (9, 11) sont bordées d'un joint d'étanchéité primaire (15, 17, 18), **caractérisé en ce que**
a) le joint d'étanchéité primaire (15, 17, 18) forme, sur sa partie entourant la région du bord supérieur de la colonne B (4), un coussin d'étanchéité (16) saillant vers l'extérieur à partir de la colonne B,
b) les portes (7, 8) présentent dans la région du coussin (16) des pièces moulées (25, 35), qui sont appliquées l'une sur l'autre et sur le coussin d'étanchéité (16) lorsque les portes sont fermées,
c) dans lequel les pièces moulées (25, 35) forment d'une part l'étanchéité des vitres de fenêtre (23, 33) par rapport aux tôles de porte (20, 21, 30, 31) et d'autre part un joint d'étanchéité secondaire (12) entre les surfaces frontales tournées l'une vers l'autre des deux portes (7, 8).

2. Véhicule automobile à quatre portes selon la revendication 1, **caractérisé en ce que** les pièces moulées (25, 35) forment sur leurs faces tournées l'une vers l'autre des bourrelets d'étanchéité souples (26, 36) coopérant l'un avec l'autre.

3. Véhicule automobile à quatre portes selon la revendication 2, **caractérisé en ce que** les portes (7, 8) sont montées sur la carrosserie (1) au moyen de charnières (40) sur le côté avant dans la direction de déplacement et le bourrelet d'étanchéité (36) de la pièce moulée (35) de la porte arrière (8) est plus proche du coussin d'étanchéité (16) que le bourrelet d'étanchéité (26) de la pièce moulée (25) de la porte avant (7), de telle manière qu'il se glisse partiellement entre le bourrelet d'étanchéité (26) de la porte avant (7) et le coussin d'étanchéité (16) lors de la fermeture de la porte arrière (8).

4. Véhicule automobile à quatre portes selon la revendication 1, **caractérisé en ce que** les pièces moulées (25, 35) sont insérées dans des découpes (22, 32) sur le côté frontal respectif de la porte respective (7, 8) et sont emboîtées sur le bord supérieur (45) de la porte.

5. Véhicule automobile à quatre portes selon la revendication 1, **caractérisé en ce que** les pièces moulées (25, 35) se prolongent par les joints d'étanchéité (43) des fourreaux de fenêtre à l'intérieur de la porte (7, 8).

6. Véhicule automobile à quatre portes selon la revendication 5, **caractérisé en ce que** les pièces moulées (25, 35) sont formées d'une seule pièce avec les joints d'étanchéité (43) des fourreaux de fenêtre ou sont assemblées à ceux-ci par vulcanisation.
